# EUROPEAN PATENT APPLICATION

(11) **EP 3 308 679 A1**
(43) Date of publication of application: **18.04.2018**
(21) Application number: 17195523.0
(22) Date of filing: 09.10.2017
(51) Int. Cl.: A47G 7/04, A01G 9/02

(54) **HANGING POT**

(30) Priority: 14.10.2016 IT 201600103632 U
(71) Applicant: Euro 3 Plast S.p.A., 36021 Vicenza (IT)
(72) Inventor: BOSCATO, Alvise, 36033 Vicenza (IT)
(74) Representative: Bettello, Pietro

(57) **Abstract**

A hanging pot (1) to be hung directly on the parapets of balconies and terraces consisting of a handrail and vertical poles. The hanging pot (1) comprises a container (2) which is provided with a clamp (3), consisting of an arched section (4) for leaning on the handrail of the parapet. The container (2) is shaped so that the hanging pot (1) rotates by gravity about the longitudinal axis of said clamp (3) until a terminal part (5) of said container (2) leans against the vertical poles of the parapet and the upper edge of said container (2) is arranged in a substantially horizontal configuration. Further a double hanging pot consisting of two containers and an intermediate saddle is disclosed, the upper edges of the containers being substantially horizontal when terminal parts of the containers lean against the vertical poles of the parapet.

## Description

The present invention relates to a hanging pot according to the general part of claim 1.

Currently, hanging pots used to decorate terraces and balconies are positioned within baskets that are hooked to a parapet.

In practice, this system has some drawbacks, the first of which is economic, since baskets of different conformations need to be bought in relation to the different sizes of the pots to be hung, to be sure that the pots are retained in the basket in a regular manner.

A further drawback is aesthetic since the baskets, formed by a simple frame made with a galvanized or painted metal wire, frequently do not match the aesthetic shape of the parapet, normally consisting of a railing with shaped poles and this is especially noted in winter time, when the pots are removed and the empty baskets remain hanging on the parapet.

The object of the present invention is to provide hanging pots that do not require the use of baskets or other devices to stay anchored to the parapet of terraces and balconies.

A further object of the invention is to provide hanging pots that can be hooked/removed on the parapet quickly and easily.

A further object of the invention is to provide hanging pots that can be made with a single moulding operation, thus allowing limited cost.

A further object of the invention is to provide hanging pots that can be hooked to parapets of different conformations.

A further object of the invention is to provide hanging pots that have a pleasant aesthetic appearance.

These objects are achieved with pots that are provided with an appendix that allows them to be hooked directly on the parapet and are arranged with the upper edge in a substantially horizontal configuration (upper edge slightly tilted upward or downward), which is influenced by the shape and type of parapet.

The above configuration has effect due to a self-balancing positioning that said pots take when they are placed on the parapet, usually consisting of a railing composed of an upper horizontal handrail and a plurality of vertical poles.

The invention will be better defined by the description of three possible embodiments thereof, given only by way of non-limiting example, with the aid of the accompanying drawings, in which:
- figs. 1, 2, 3 show three views, in front, side elevation and perspective, respectively, of a first embodiment of the hanging pot of the invention;
- figs. 4, 5, 6 shows three views of the pot in fig. 1, in operating step;
- figs. 7, 8, 9 show three views, in front elevation, plan and perspective, respectively, of a second embodiment of the hanging pot of the invention;
- figs. 10-13 shows views of the pot in fig. 7, in operating step;
- figs 14-17 shows four views, side view, in front elevation, plan and perspective, respectively, of a third embodiment of the hanging pot of the invention;
- figs 18-21 shows views of the pot in fig. 15, in operating step.

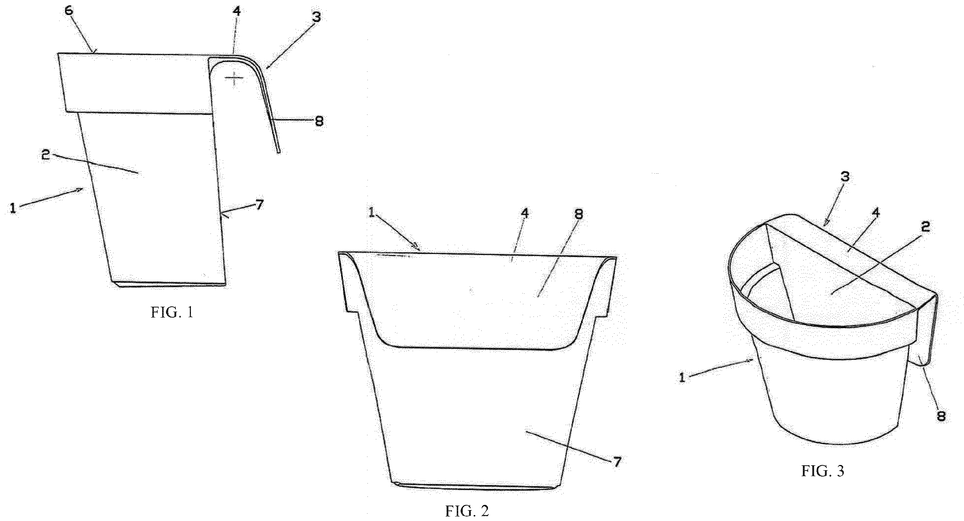

As shown in figs. 1-6, the pot of the invention, indicated with reference numeral 1, provides that container 2 is provided with a clamp 3, consisting of an arched section 4, which leans on handrail C of parapet R.

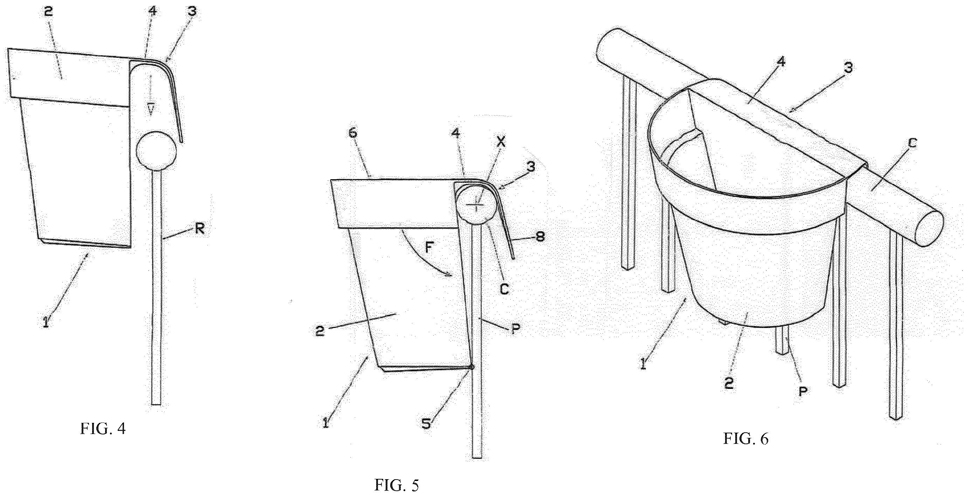

Said pot 1 further provides that container 2 is shaped so that pot 1, after having been fitted with clamp 3 on the railing (see fig. 4), to lean with the arched section 4 of handrail C, rotates by gravity about the longitudinal axis X of clamp 3 (see arrow F), until the terminal part 5 of container 2 leans against the vertical poles P of parapet R and the upper edge 6 of said container 2 arranges with a substantially horizontal configuration (see fig. 5).

A preferential embodiment of the invention provides that container 2 has a semicircular shape, which allows having an extended rear wall 7 and thus an extended support 5; moreover, clamp 3 extends with a strap 8 having a dual function, namely to extend the joint on the parapet and to facilitate the gripping of the object by the operator.

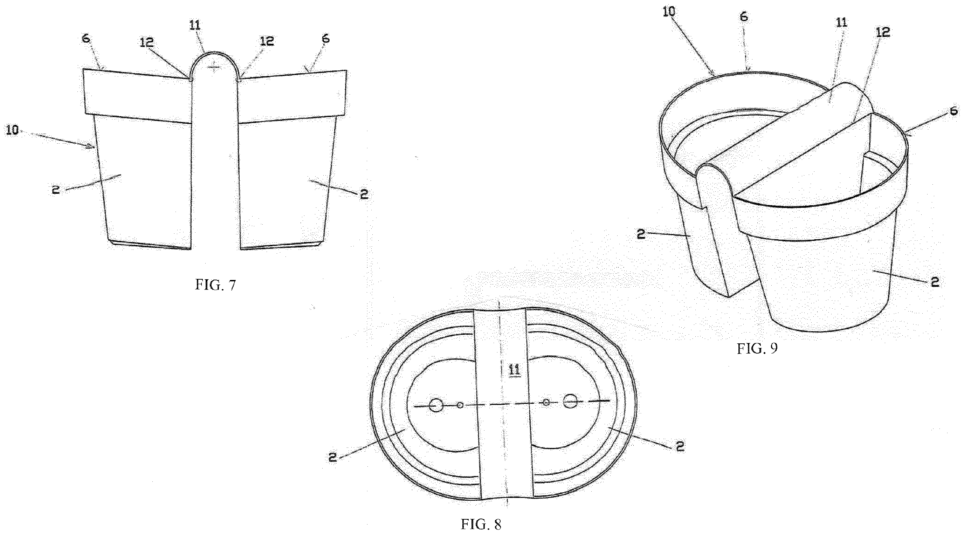

As shown in figs. 7-13, a possible variant of the foregoing is to provide a double pot, indicated with reference numeral 10, consisting of two containers 2 mutually retained by a central intermediate saddle 11, which connects to the upper edges 6 of said containers in a flexible manner along the two folding lines 12.

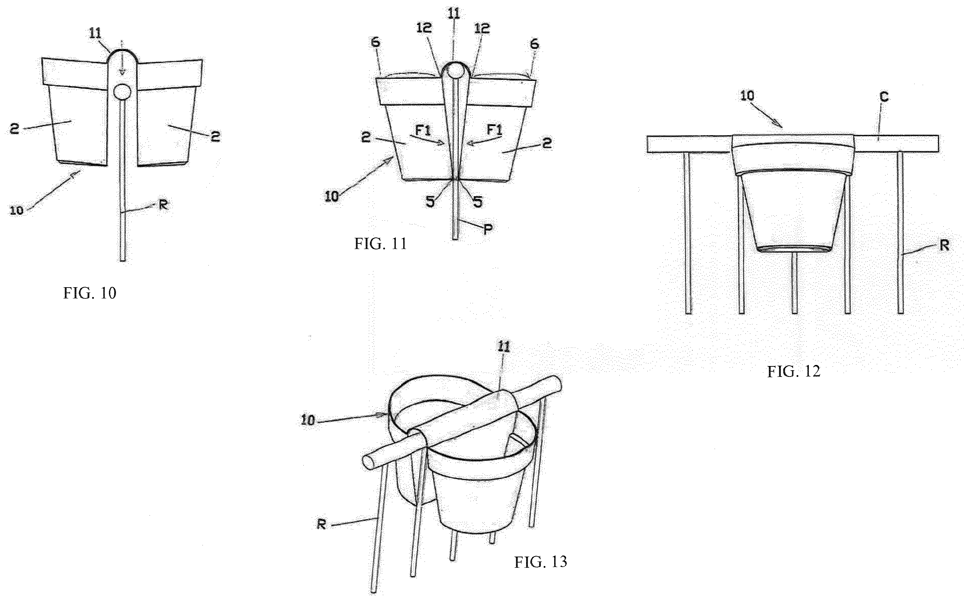

With this construction solution, the entire double pot 10 is fitted with saddle 11 on the railing (see fig. 10) to lean on handrail C and the two containers 2, due to the weight of the ground they contain, rotate along the folding lines 12 (see arrows F1), until the terminal parts 5 of containers 2 lean against the vertical poles P of parapet R and the upper edges 6 of said containers 2 are arranged in a substantially horizontal configuration (see fig. 11).

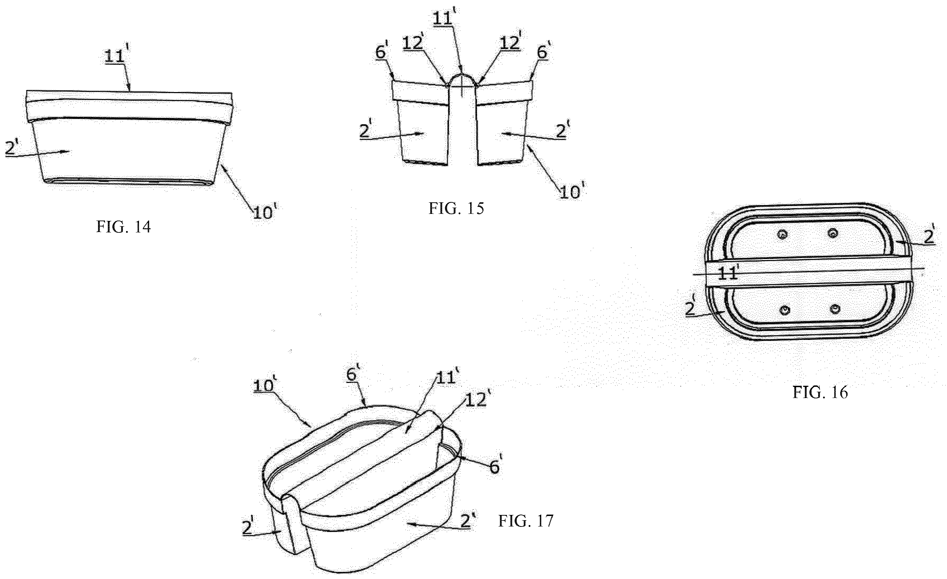

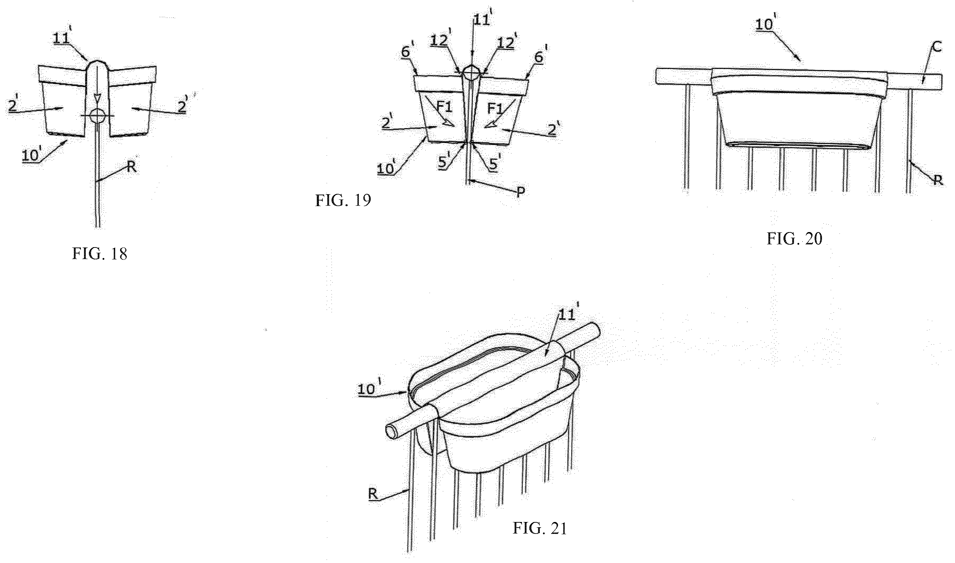

In figs 14-21 is shown another variant of the foregoing in which is provided a double pot, indicated with reference numeral 10'; the pots 10 and 10' are similar and the difference with the pot 10 consists in the fact that both the containers 2 of pot 10 are substantially semicircular, while the two containers 2' of pot 10' has a substantially elongated shape. Each container 2' of the pot 10' can contain one single elongated pot or a plurality of pots.

In practice, with the constructive solutions of the invention, hanging pots 1, 10 and 10' are provided, to be hung directly on railings or other parapets of balconies and terraces, which are "self-balanced", the upper edge 6 of containers 2 having a substantially horizontal configuration.

## Claims

1. HANGING POT, to be hung directly on the parapets of balconies and terraces, such as railings (R), consisting of a handrail (C) and vertical poles (P),
said hanging pot (1) being **characterised in that** it provides that the container (2), which is provided with a clamp (3), consisting of an arched section (4) which leans on the handrail (C) of the parapet, said container (2) being shaped so that the entire pot (1) rotates by gravity about the longitudinal axis (X) of said clamp (3), until the terminal part (5) of said container (2) leans against the vertical part of the parapet and the upper edge (6) of said container (2) is arranged in a substantially horizontal configuration.

2. HANGING POT, according to claim 1, **characterised in that** the container (2) has a semicircular shape, with an extended rear wall (7).

3. HANGING POT, according to claim 1, **characterised in that** the clamp (3) extends with a strap (8) having a dual function, namely to extend the joint on the parapet and to facilitate the gripping of the object by the operator.

4. DOUBLE HANGING POT (10, 10'), **characterised in that** it consists of two containers (2, 2') mutually retained by a central intermediate saddle (11, 11'), which connects to the upper edges (6, 6') of said containers (2, 2') in a flexible manner along two folding lines (12, 12').

5. DOUBLE HANGING POT (10, 10') according to claim 4, **characterised in that** once the saddle (11, 11') is leaning on the parapet, the two containers (2, 2'), due to the weight of the ground they contain, rotate along folding lines (12, 12') until their terminal parts (5, 5') lean against the vertical part of the parapet and the upper edges (6, 6') of said containers (2, 2') are arranged in a substantially horizontal configuration.

6. HANGING POTS (1, 10, 10'), according to one or more of the preceding claims, **characterised in that** they are "self-balanced", the upper edge (6, 6') of the containers (2, 2') having a substantially horizontal configuration.
